**Europäisches Patentamt**

**European Patent Office**

**Office européen des brevets**

(19)

(11) Publication number: **0 295 025 B1**

# EUROPEAN PATENT SPECIFICATION

(12)

(45) Date of publication of patent specification: **22.04.92**　(51) Int. Cl.⁵: **G11B 23/03**, G11B 23/033

(21) Application number: **88305126.0**

(22) Date of filing: **06.06.88**

(54) **Disk Cartridge Device.**

(30) Priority: **08.06.87 JP 141331/87**

(43) Date of publication of application:
**14.12.88 Bulletin 88/50**

(45) Publication of the grant of the patent:
**22.04.92 Bulletin 92/17**

(84) Designated Contracting States:
**DE GB**

(56) References cited:
**EP-A- 0 250 111**
**EP-A- 0 260 898**
**FR-A- 2 569 484**

(73) Proprietor: **Hitachi Maxell Ltd.**
**No 1-1-88, Ushitora Ibaraki-shi**
**Osaka-fu(JP)**

(72) Inventor: **Fujita, Minoru**
**2-2-502 Togashira-1-chome**
**Toride-shi(JP)**

(74) Representative: **Williams, Trevor John et al**
**J.A. KEMP & CO. 14 South Square Gray's Inn**
**London WC1R 5EU(GB)**

Rank Xerox (UK) Business Services

## Description

The present invention relates to a disk cartridge device which encases a double-sided recording disk. More particularly, the invention is concerned with an improved construction of a shutter provided on such a cartridge disk device.

Disk type recording medium such as a magnetic disk or an optical disk is usually housed in a cartridge case of a disk cartridge which encases the disk in such a manner as to keep the disk from dusts and other foreign matters, while facilitating the handling of the disk. When the disk is to be used for the purpose of recording or reproducing of information, the disk cartridge encasing the disk is mounted in the recording or reproducing apparatus. Therefore, the case of the disk cartridge is provided with head insertion or access openings for enabling the recording or reproducing head to make access to the disk type recording medium therethrough when the recording medium is mounted in the apparatus while being encased in the case of the disk cartridge.

The provision of the head insertion openings, however, poses the following problems. Firstly, it is to be pointed out that the recording surface of the disk type recording medium tends to be contaminated by dust and other matters which may come into the disk cartridge through the head insertion openings when the disk is not used. It is also experienced that the recording surface of the disk type recording medium is damaged or contaminated by fingers or other members which may contact the recording surfaces through the head insertion openings when the disk is not used. They may affect the recording and/or reproduction properties to be degraded. In order to avoid these problems, therefore, it has been a common measure to provide a shutter which is designed to close the head insertion openings when they are not used.

Under these circumstances, a disk cartridge device has been proposed in which the shutter always move in one direction to open the head insertion openings regardless of which side of the recording medium is being used, as disclosed in Japanese Patent Unexamined Publication No. 60-43279.

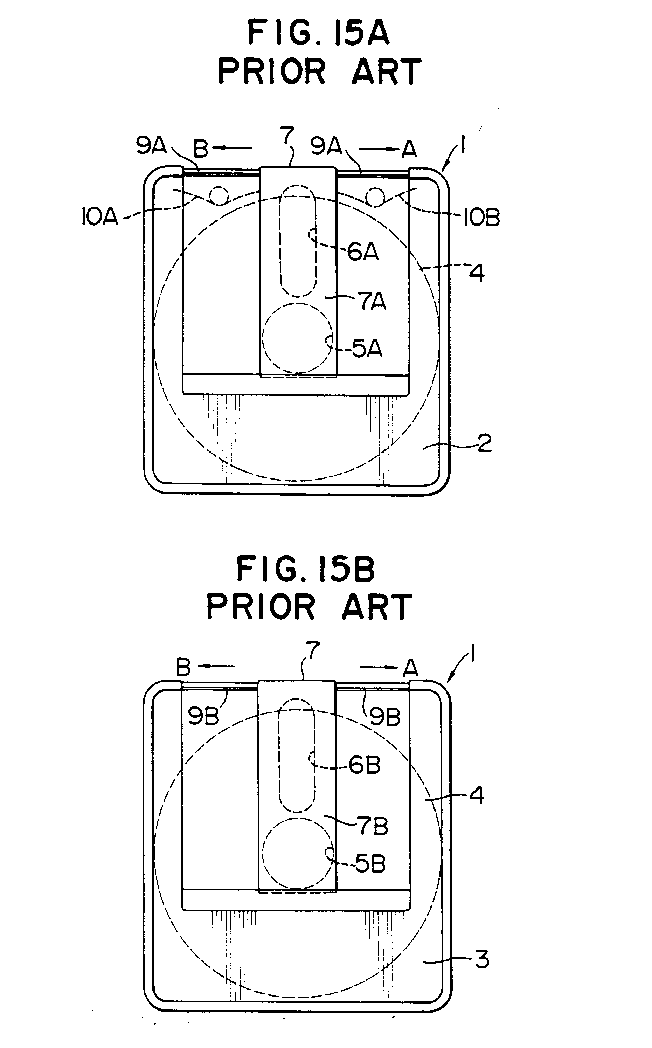

Figs. 15A and 15B are plan views showing the obverse and reverse sides of such a disk cartridge.

This disk cartridge has a shutter 7 in a substantial U-shaped form such as to clamp the cartridge case 1. The shutter has shutter walls 7A and 7B which do not have any opening and have rectangular form which is large enough to cover the head insertion openings 6A, 6B in the case 1 and the spindle holes 5A, 5B formed in the same. The shutter 7 is slidable in the directions of arrows A and B along guide grooves 9A and 9B which are provided in the upper case 2 and the lower case 3 of the cartridge case 1. When the recording medium is not used, however, the shutter 7 is located at the breadthwise center of the cartridge case 1 and is urged by springs 10A and 10B such as to close the spindle holes 5A, 5B and the head insertion holes 6A, 6B.

When the disk cartridge is used with the case 2 directed upward as shown in Fig. 15A so as to effect recording or reproducing information in and from one of the recording surfaces of a disk-type recording medium 4, a shutter actuating mechanism (not shown) on the recording/reproducing apparatus operates to cause the shutter 7 to slide in the direction of the arrow A to the end of the stroke of the sliding movement thereof against the force of the spring 10B. In consequence, the spindle hole 5A and the head insertion opening 6A are opened. In this state, the shutter 7 has been moved in the direction of the arrow B with respect to the reverse side of the disk cartridge shown in Fig. 15B, i.e., on the lower case 3, so that the spindle hole 5B and the head insertion opening 6B are also opened.

When the information is to be recorded in or reproduced from the side of the disk-type recording medium 4 which is opposite to the side mentioned above, the disk cartridge is mounted such that the lower case 3 is directed upward, as shown in Fig. 19B. In this case, the shutter 7 is moved in the direction of the arrow A which coincides with the direction indicated by the arrow A in Fig. 15A, against the force of the spring member 10A (see Fig. 15A), whereby the spindle hole 5B and the head insertion hole 6B are opened. In this state, the shutter 7 has been moved in the direction of the arrow B on the obverse side of the disk cartridge shown in Fig. 15A, i.e., the upper case 2, so that the spindle hole 5A and the head insertion opening 6A are also opened.

As will be understood from the foregoing description, in this type of disk cartridge, the shutter 7 moves always in the same direction with respect to the case of the disk cartridge, regardless of which side of the recording medium 4 is subjected to the recording or reproduction of the information, so that the shutter actuating mechanism is simplified to contributes to simplification of the recording/reproducing apparatus. In addition, a higher effect for preventing contamination can be attained, because the spindle holes 5A and 5B are closed, when the disk cartridge is not used.

The disk cartridge of the type described above is disadvantageous in that it requires a pair of springs 10A and 10B so that the number of the parts is increased. In addition, the mounting of the shutter 7 on the disk cartridge device requires troublesome work including fitting of the shutter 7 onto the cartridge case 1, and expansion of openings at an end face of the cartridge case 1 to allow the springs 10A, 10B (torsion coil springs) to be inserted therethrough. Since the springs 10A, 10B are adapted to be inserted into the cartridge case 1 after the assembly of the upper and lower cases 2 and 3, the spring receiving portions of the cartridge case 1 are opened towards the outside through the openings at the end face of the case 1. This tends to allow the springs 10A, 10B to spring out by their resiliences from the spring receiving portions, when these portions are subjected to external force.

Accordingly, an object of the present invention is to provide a disk cartridge which has a reduced number of parts and preferably which is easy to assemble, thereby overcoming the abovedescribed problems of the prior art.

EP-A-0 250 111 and EP-A-0 260 898, both of which are intermediate documents, disclose a disk cartridge with a shutter which can be moved in either direction from a rest position where it covers the head insertion openings in order to open the head insertion openings. In these constructions, in each case a tension spring is utilised between intermediate members which alternatively couple to the cartridge and to the shutter to tension the spring when the shutter is moved from its central position to open the head insertion openings. As compared therewith, the present invention, as defined in claim 1, utilises a simpler construction requiring the provision of a simple compression spring to provide the resilient force restoring the shutter to its central position closing the access openings in the cartridge.

The present invention will become further apparent from the following description of the preferred embodiment when the same is read in conjunction with the accompanying drawings, in which:-

Figures 1A and 1B are, respectively, a top plan view of, and a bottom plan view of, an upper case of a disk cartridge in accordance with a first embodiment of the invention;

Figures 2A and 2B are, respectively, a bottom plan view and a top plan view of a lower case of the disk cartridge of the first embodiment;

Figs. 3 and 4 are, respectively, a plan view and a side elevational view of a shutter;

Figs. 5 and 6 are, respectively, an enlarged plan view and an enlarged side elevational view of a portion of the shutter;

Figs. 7 and 8 are, respectively, a top plan view and a bottom plan view of the portion of the shutter as shown in Fig. 5;

Fig. 9 is a plan view of the disk cartridge;

Fig. 9A is a partially broken enlarged plan view illustrative of a portion of the disk cartridge;

Fig. 9B is a partially broken view of the portion of the disk cartridge shown in Fig. 9A;

Fig. 10 is a sectional view taken along a line X-X of Fig. 9 showing the state in which a spring is retained;

Fig. 11 is a sectional view along a line XI-XI of Fig. 9 without the spring and the shutter.

Fig. 12 is an enlarged sectional view of a portion of the lower case taken along a line XII-XII of Fig. 2B;

Fig. 13 is an enlarged fragmentary sectional view taken along the line XIII-XIII in Fig. 9A, illustrating the manner in which the cartridge case and the shutter engage with each other;

Fig. 14 is a plan view of a modification of the shutter;

Figs. 15A and 15B are, respectively, a top plan view and a bottom plan view of a conventional disk cartridge.

Referring now to the accompanying drawings, a description will be made of the preferred embodiments of the present invention.

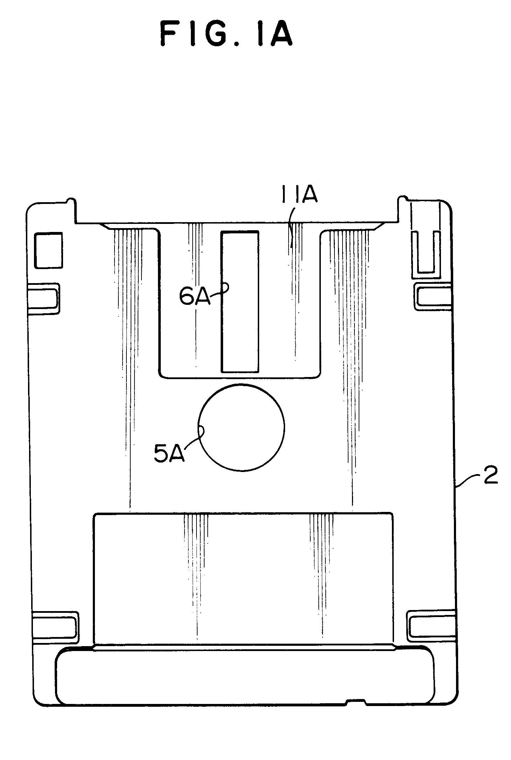

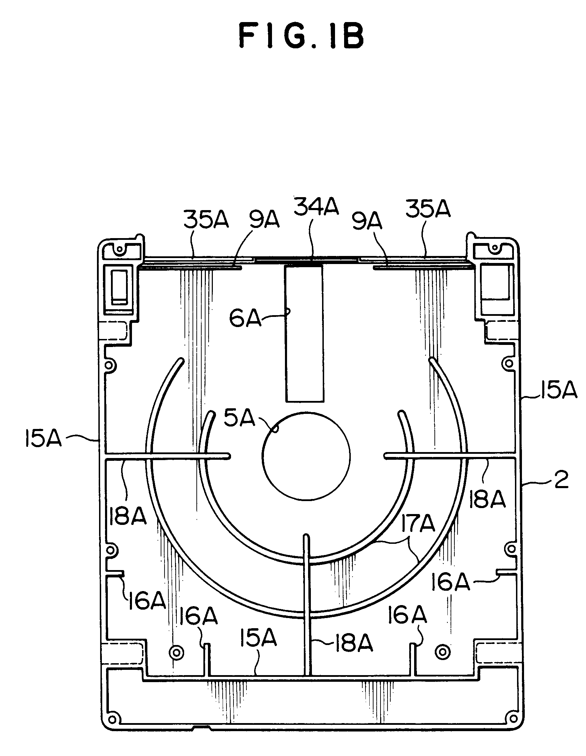

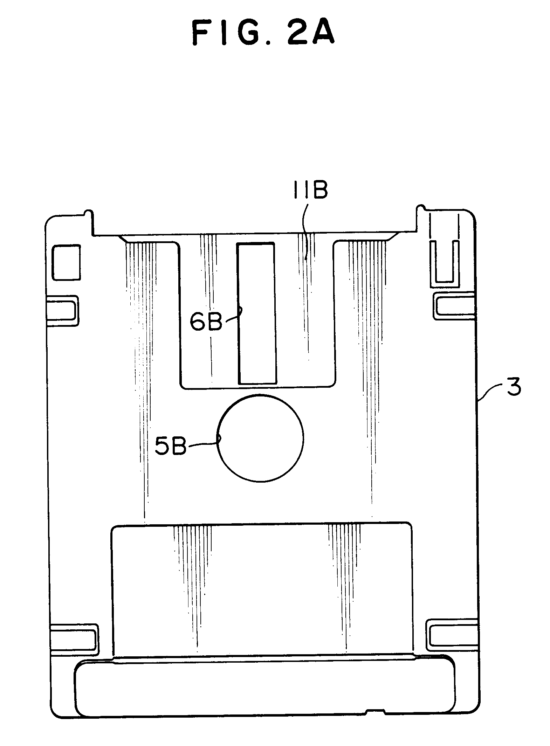

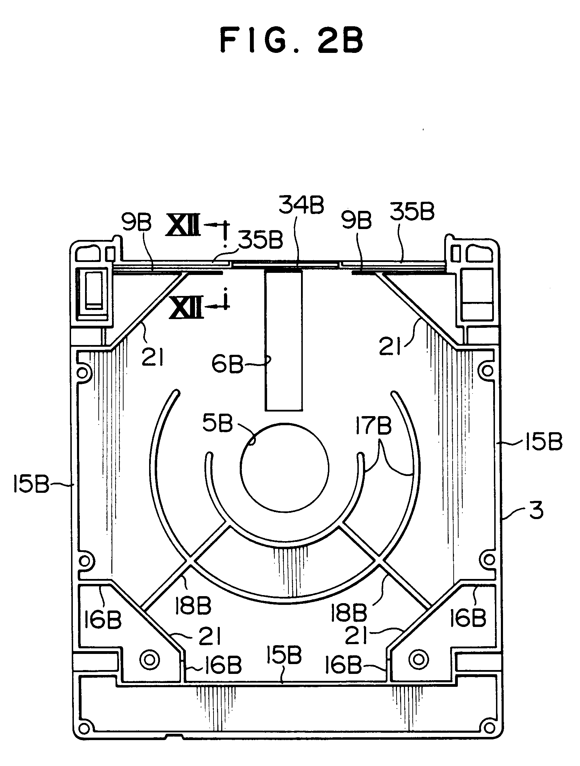

With reference to Figs. 1A, 1B, 2A, and 2B, a description will be given of a cartridge case 1. As shown in these drawings, the cartridge case 1 comprises the following components or portions: an upper case 2, a lower case 3; spindle holes 5A, 5B; head insertion or access openings 6A, 6B; shutter sliding portions 11A, 11B; side walls 15A, 15B; walls 16A, 16B; arcuate ribs 17A, 17B; radial ribs 18A, 18B; and partition walls 21.

With reference to Figs. 1A and 1B, the upper case 2 is provided with the spindle hole 5A in a substantially central portion thereof, while the head insertion opening 6A is provided at a forward position (in an upward position in Figs. 1A and 1B) of the upper case 2 with respect to the spindle hole 5A.

An outer surface of this upper case 2 is provided with the shutter sliding portion 11A of a planar configuration which is disposed forwardly of the spindle hole 5A and is slightly recessed as compared with other portions, as shown in Fig. 1A. This shutter sliding portion 11A has a substantially rectangular configuration, and includes the head insertion opening 6A. A guide groove 9A extending to opposite sides in the vicinity of a front end surface is formed on a rear side of the shutter sliding portion 11A, i.e., on an inner side of the upper case 2, as shown in Fig. 1B.

A plurality of the arcuate ribs 17A are provided on the inner side of the upper case 2 concentrically with the spindle hole 5A, as shown in Fig. 1B. A plurality of the radial ribs 18A project inwardly from the side wall 15A such as to be formed radially with respect to the spindle hole 5A. The height of these arcuate ribs 17A and radial ribs 18A is lower than that of the side wall 15.

The lower case 3 has substantially the same arrangement as that of the upper case 2 in terms of the outer and inner surfaces thereof, as shown in Figs. 2A and 2B. Accordingly, in Figs. 2A and 2B, those portions corresponding to the elements of Figs. 1A and 1B are denoted by reference characters in which A in Figs. 1A and 1B is merely replaced with B.

However, on the inner surface of the lower case 3, the partitions 21 are provided to tips or ends of the walls 16B respectively projecting from the side walls 15B in such a manner as to isolate the four corners of the lower case 3, as shown in Fig. 2B. The height of these partitions 21 is higher than that of the side walls 15B and the walls 16B.

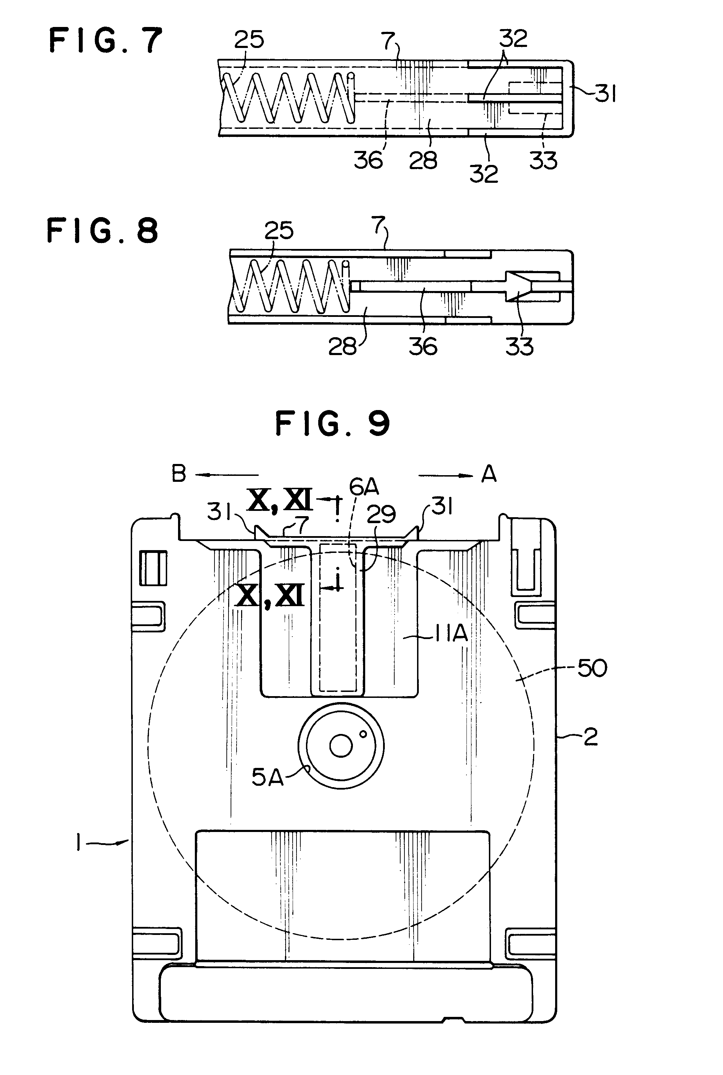

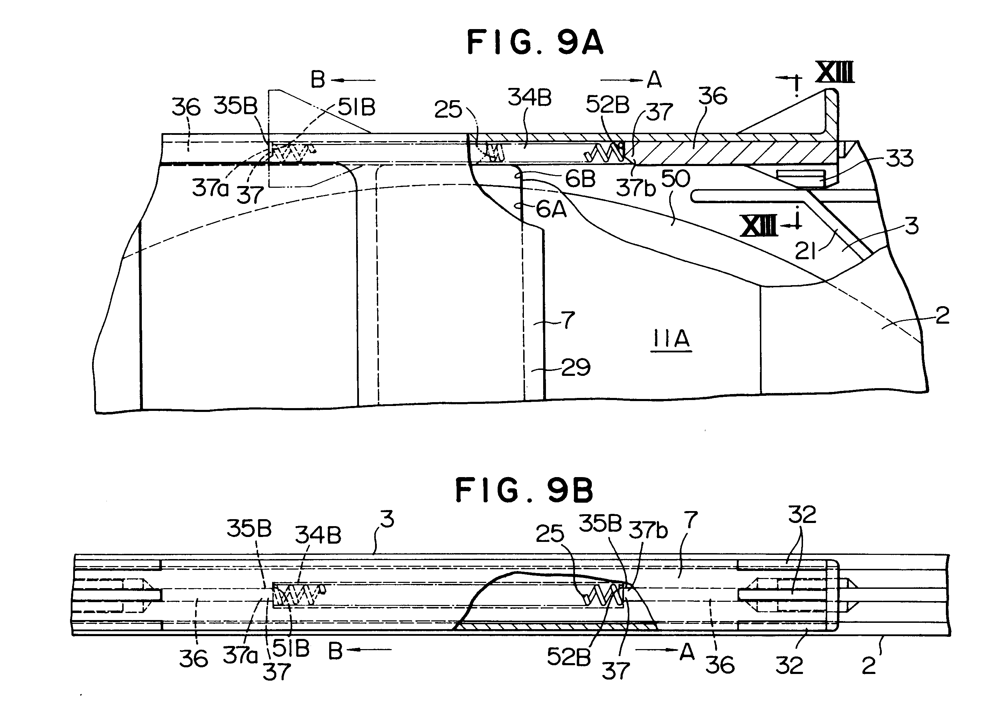

A disk-shaped recording medium 50 (see Figs. 9A and 9B) is disposed on the inner surface of the lower case 3, and if the upper case 2 is superposed on the lower case 3 in such a manner that the inner surface of the upper case 2 faces the inner surface of the lower case 3 and the outer peripheries thereof are aligned, the upper and lower cases 2 and 3 are made integral. If these cases 2 and 3 are subjected to ultrasonic heating and are bonded together, the cartridge case 1 is obtained.

At this time, the side walls 15A, 15B of the upper and lower cases 2, 3 are adhered together, and the walls 16A, 16B are similarly adhered. In addition, the partitions 21 of the lower case 3 are adhered to the inner surface of the upper case 2. Accordingly, this arrangement hermetically seals the disk-shaped recording medium.

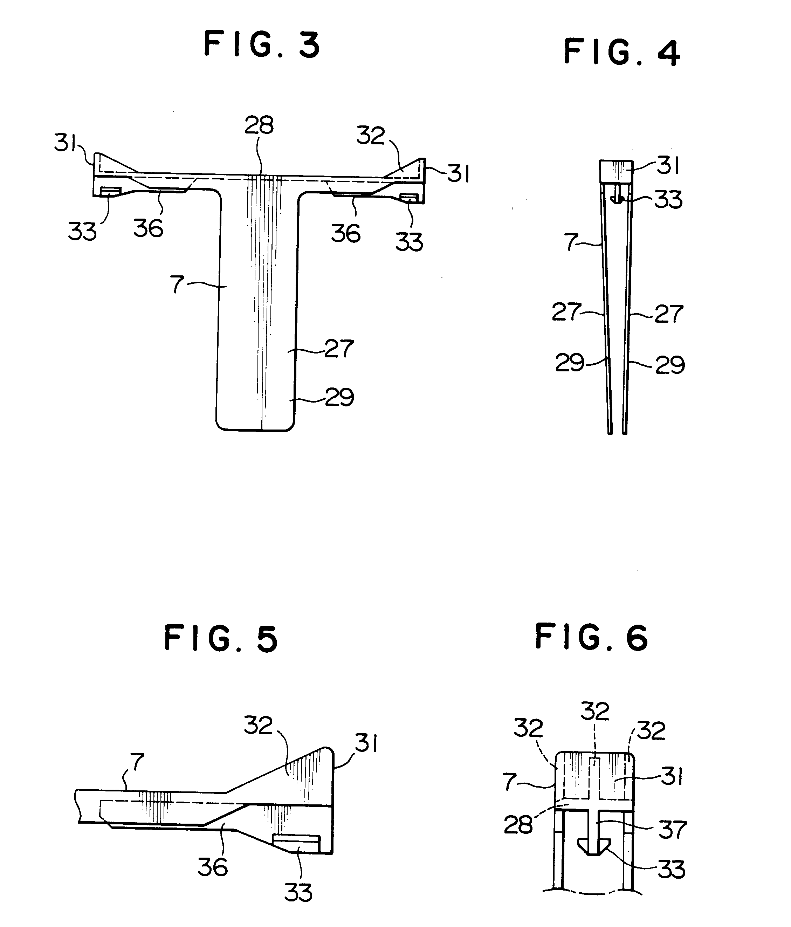

Figs. 3 and 4 are respectively a top plan view and a side-elevational view of a shutter 7; Figs. 5 and 6 are respectively a top plan view of a portion of the shutter 7 and a side-elevational view of the portion; and Figs. 7 and 8 are a top plan view and a bottom view of the shutter portion shown in Fig. 5.

In these drawings, numerals 27 denote a pair of shutter plane portions, which are connected to each other by means of a coupling or connecting portion 28 and are arranged to have a U-shaped cross section. As shown in Fig. 3, a closing cover portion 29 is formed in a central portion of the shutter plane portion 27. In addition, as shown in Figs. 3 and 4, abutting portions 31 against which shutter opening members of a recording and reproducing apparatus abut are formed at upper opposite ends of the shutter plane portion 27. Each of these abutting portions 31 is reinforced by three triangular reinforcing plate portions 32 (see Figs. 3, 5, 6, and 7).

In addition, an intermediate reinforcing plate portion 32 of the three reinforcing plate portions 32 extends downward, i.e., toward the side of the shutter plane portion 27, to form an engaging claw 33. As shown in Fig. 3, these engaging claws 33 are respectively provided on the opposite sides of the shutter 7. Furthermore, an engaging projection 36 for engaging with a spring member 25 is formed on the inner side of each of the engaging claws 33 (see Figs. 5, 7 and 8).

Figs. 9 to 13 are drawings for explaining the engaging relationships among the shutter 7, the cartridge case 1, and the spring member 25.

As shown in Figs. 9, 9A and 9B, the shutter 7 is set substantially in the center of the cartridge case 1 in such a manner that the head insertion openings 6A, 6B in the cartridge case 1 are respectively closed by the two closing cover portions 29. This shutter 7 and the spring member 25 are mounted in the following procedure.

Namely, the spring 25 is first pressed into a spring retaining groove 34B in a state in which the spring member 25 is slightly compressed between end portions 51B and 52B of tapered portions 35B of the lower case 3, as shown in Figs. 2B, 9A, and 9B. This spring member 25 is constituted by a coil spring having, for instance, a wire diameter of 0.1 mm, an outside diameter of 1 mm, and a number of active coils of 35 turns, and an axial free length thereof when it is not compressed being 18 mm. Since this spring member 25 is pressed into the spring retaining groove 34B having a length of 17 mm, the spring member 25 becomes slightly compressed. As the spring member 25 is compressed in this state, the opposite end portions thereof are resiliently brought into contact with the end or side surfaces 51B and 52B of the tapered portions 35B of the lower case 3 shown in Fig. 11, thereby making it possible to retain the spring member 25.

As shown in Fig. 2B, the aforementioned spring retaining groove 34B is formed in a substantially central portion of the lower case 3 in such a manner as to correspond to the head insertion opening 6B, and tapered portions 35B are respectively formed on both sides thereof. A pair of guide grooves 9B are respectively formed on the inner sides (on the lower sides in Fig. 2B) of these tapered portions 35B in parallel with the tapered portions 35B. As shown in Fig. 1B, the upper case 2 is substantially similarly provided with a spring retaining groove 34A which is formed in a substantially central portion of the upper case 2 in such a manner as to correspond with the head insertion opening 6A, and tapered portions 35A are respectively formed on both sides thereof. Guide grooves 9A are respectively formed on the inner sides (the lower sides in Fig. 1B) of the tapered portions 35A in parallel with the tapered portions 35A which guide the movement in the directions A, B of the engaging claws 33, which will be described below, of the shutter 7.

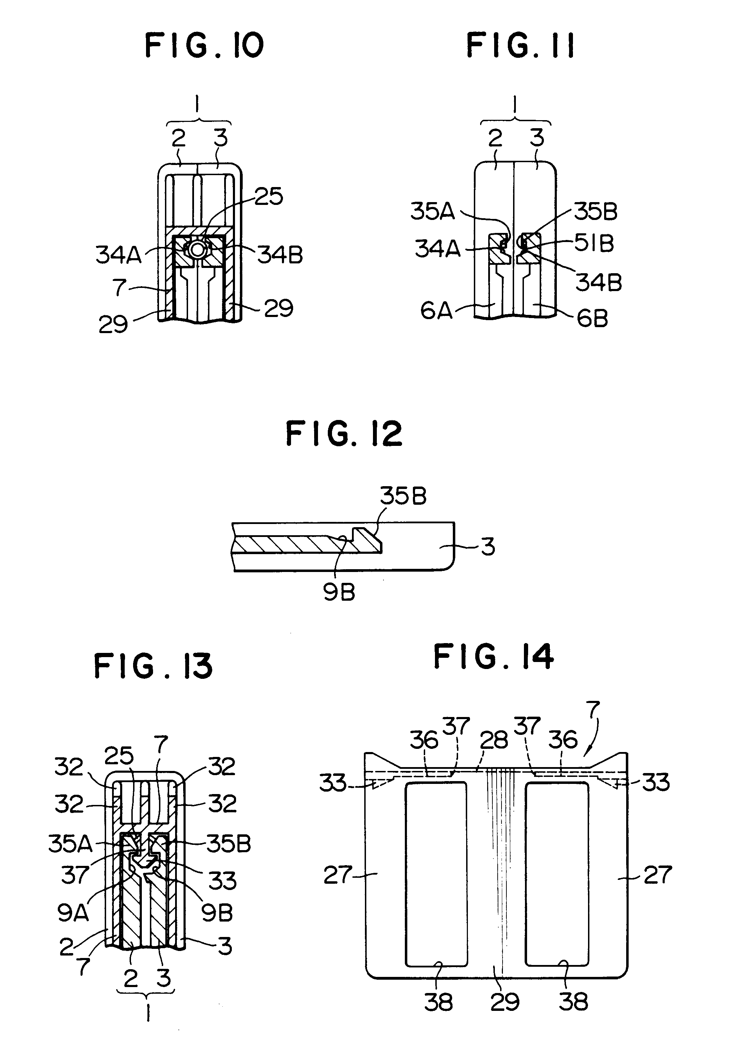

Accordingly, after the spring member 25 is inserted into the spring retaining groove 34B of the lower case in such a manner that the spring member 25 is compressed between the end portions 51B, 52B of the two tapered portions 35B, as shown in detail in Figs. 9A and 9B, and if the upper case 2 is superposed on the lower case 3, the spring retaining grooves 34A, 34B are opposed to each other at a predetermined interval therebetween, as shown in Figs. 10 and 11, and the spring member 25 is retained with the spring retaining grooves 34A, 34B in such a manner as to be capable of being further compressed returned and not to project to the outside. After the spring member 25 is disposed between the upper and lower cases 2, 3, the shutter 7 is inserted to be set. At the time when the shutter 7 is set, the tapered portions 35A, 35B serve as guides for insertion of the retaining claws 33. The opposite end portions of the retaining claws 33 are ultimately inserted into the guide grooves 9A, 9B of the upper and lower cases 2, 3, as shown in Fig. 13.

The interval or distance between the engaging protrusion 36 on the right-hand side and the engaging protrusion 36 on the left-hand side of the shutter 7 both shown in Fig. 3 is designed to be substantially equal to the length of the spring retaining grooves 34A, 34B. As this shutter 7 is set in the central portion of the case 1, leg portions 37 of the engaging protrusions 36 on both sides of the shutter 7 oppose the opposite end portions of the spring member 25 (see Fig. 13).

In the state shown in Figs. 9, 9A and 9B, when an external force has acted to move the shutter 7 in the rightward direction (in the direction of A), the spring member 25 is compressed between a leg portion 37a on the rear side in the moving direction A among the leg portions 37a, 37b on the one hand, and side surfaces 52B of the tapered portions 35B on the opposite side thereof on the other. Consequently a resiliently urging force which tends to push the shutter 7 backward in the direction B opposite to the moving direction A acts on the shutter 7 owing to the reaction force of the spring member 25. When the shutter 7 is moved leftwardly (in the direction of B) as well, the spring member 25 is similarly compressed between a leg member 37b in the rear side in the moving direction B among the leg portions 37a, 37b on the one hand, and the side surfaces 51B of the tapered portions 35B on the opposite side thereof, so that a resiliently urging force by the spring 25 in the closing direction A acts on the shutter 7.

Fig. 14 is a top plan view illustrating a modification of the shutter 7. The shutter 7 in accordance with the above-described embodiment has a substantially T-shaped planar configuration, as shown in Figure 3, and the shutter plane portion 27 is provided with the closing cover portions 29 alone. In the case of the shutter 7 of this modification, the closing cover portion 29 is formed in a central portion of the shutter plane portion 27, and openings 38 of a size substantially identical with the head insertion openings 6A, 6B are respectively formed on sides thereof.

In the above-described embodiments, the spring retaining portion is disposed substantially in the centre of the shutter sliding region of the cartridge case; however, the present invention is not restricted to the same, and the spring retaining portion may be provided in a different location of the case.

Although, in the foregoing embodiments, the coil spring is used as a spring member or spring means, the present invention is not restricted to the same, and a spring member such as a leaf spring bent into the shape of a chevron may be used.

Since the present invention is arranged as described above, even in an apparatus where the shutter moves to both left- and right-hand sides, only one spring member can be used, which contributes to a reduction in the number of parts used and improvement in the assembling efficiency.

**Claims**

1. A disk cartridge device comprising a cartridge case (1) having head insertion openings (6A,6B), a disk-type recording medium (50) rotatably mounted in said cartridge case (1), a shutter (7) capable of moving in the directions orthogonal to a direction of length of said head insertion openings (6A,6B) and adapted to open and close said head insertion openings (6A,6B), and a compression spring member (25) for resiliently urging said shutter (7) in the closing direction, wherein the disk cartridge device further comprises: spring retaining portions (35A,35B,51B,52B), for retaining the spring member (25), provided in either one of said cartridge case (1) and said shutter (7); and engaging portions (36,37) provided on the other of said cartridge case (1) and said shutter (7); said engaging portions (36,37) being adapted to be engaged with the spring member (25) retained by at least one of said spring-retaining portions (35A,35B,51B,52B) so that, when said shutter (7) is moved to open the head insertion openings (6A,6B), said shutter (7) is resiliently urged by said spring member (25) in the direction opposite to the direction of movement.

2. A disk cartridge device according to claim 1, wherein said spring retaining portions (35A,35B,51B,52B) are provided on said cartridge case (1), while said engaging portions (36,37) are provided on said shutter (7).

3. A disk cartridge device according to claim 2, wherein said spring retaining portions (35A,35B,51B,52B) are provided substantially symmetrically with each other to the centre of the stroke of the sliding movement of said shutter.

4. A disk cartridge device according to claim 3, wherein said shutter (7) has a substantially T-shaped planar shape with closing cover portions (29) provided on the central portion of the shutter walls (27).

5. A disk cartridge device according to claim 3. wherein a closing cover portion (29) is provided on the central portion of the shutter wall (27) and said head insertion opening (38) are provided on either side of said cover portion (29).

6. A disk cartridge device according to any preceding claim, wherein the compression spring member (25) comprises a coil spring which is compressible as a result of movement of said shutter (7) from its central portion so as to produce a reaction force resiliently to urge said shutter (7) back to its central position.

7. A disk cartridge device according to any preceding claim, wherein said shutter (7) has opposing shutter plane portions (27) connected through a connecting portion (29) in such a manner as to exhibit a substantially U-shaped cross-section, and wherein a retaining claw (33) is formed to project from the inner surface of said connecting portion (28) so as to be engaged with a guide groove (9A,9B) formed in the inner surface of said cartridge case (1) thereby to guide the movement of said shutter (7).

**Revendications**

1. Cartouche de disque comprenant un boîtier (1) comportant des ouvertures (6A, 6B) d'insertion de tête, un support d'enregistrement (50) du type disque monté de façon tournante dans le boîtier (1), un obturateur (7) pouvant se déplacer dans des directions perpendiculaires à la direction de la longueur des ouvertures (6A, 6B) d'insertion de tête et adapté pour ouvrir et fermer ces ouvertures (6A, 6B) d'insertion de tête, et un ressort de compression (25) pour pousser de façon élastique l'obturateur (7) dans la direction de fermeture, la cartouche de disque comprenant, en outre : des parties (35A, 35B, 51B, 52B) de retenue de ressort destinées à retenir le ressort (25) et se trouvant sur l'un des boîtier (1) et obturateur (7) ; et des parties d'attaque (36, 37) se trouvant sur l'autre des boîtier (1) et obturateur (7) ; les parties d'attaque (36, 37) étant adaptées pour être attaquées par le ressort (25) retenu par au moins une des parties (35A, 35B, 51B, 52B) de retenue de ressort de telle sorte que lorsque l'obturateur (7) est déplacé de manière à ouvrir les ouvertures (6A, 6B) d'insertion de tête, l'obturateur (7) est poussé élastiquement par le ressort (25) dans la direction opposée à la direction de déplacement.

2. Cartouche de disque selon la revendication 1, dans laquelle les parties (35A, 35B, 51B, 52B) de retenue de ressort se trouvent sur le boîtier (1) tandis que les parties d'attaque (36, 37) se trouvent sur l'obturateur (7).

3. Cartouche de disque selon la revendication 2, dans laquelle les parties (35A, 35B, 51B, 52B) de retenue de ressort sont disposées de façon sensiblement symétrique l'une vis-à-vis de l'autre par rapport au centre de la course du déplacement coulissant de l'obturateur.

4. Cartouche de disque selon la revendication 3, dans laquelle l'obturateur (7) a une configuration plane sensiblement en forme de T avec des parties couvrantes de fermeture (29) se trouvant dans la partie centrale des parois (27) de l'obturateur.

5. Cartouche de disque selon la revendication 3, dans laquelle une partie couvrante de fermeture (29) se trouve dans la partie centrale de la paroi (27) de l'obturateur et l'ouverture (38) d'insertion de tête se trouve sur l'un ou l'autre côté de la partie couvrante (29).

6. Cartouche de disque selon l'une quelconque des revendications précédentes, dans laquelle le ressort de compression (25) est constitué par un ressort hélicoïdal qui peut être compressé sous l'effet du déplacement de l'obturateur (7) depuis sa partie centrale de manière à produire une force de réaction qui repousse élastiquement l'obturateur (7) vers sa position centrale.

7. Cartouche de disque selon l'une quelconque des revendications précédentes, dans laquelle l'obturateur (7) comporte des parties de paroi (27) raccordées par une partie de raccordement (29) de manière telle qu'il présente une section droite sensiblement en forme de U, et dans laquelle une griffe de retenue (33) est formée de manière à faire saillie de la surface intérieure de la partie de raccordement (28) afin d'être engagée dans une rainure de guidage (9A, 9B) formée dans la surface intérieure du boîtier (1) afin de guider ainsi le déplacement de l'obturateur (7).

**Patentansprüche**

1. Plattenkassetten-Vorrichtung, die aufweist: ein Kassettengehäuse (1) mit Kopfeinführöffnungen (6A, 6B), ein drehbar in dem Kassettengehäuse (1) angeordnetes plattenartiges Aufzeichnungmedium (50), ein Verschlußteil (7), das in Richtungen bewegbar ist, die zu einer Längsrichtung der Kopfeinführöffnungen (6A, 6B) orthogonal sind, und die Kopfeinführöffnungen (6A, 6B) öffnet und schließt, und ein Druckfederelement (25) zum federnden Beaufschlagen des Verschlußteils (7) in die Schließrichtung, wobei die Plattenkassetten-Vorrichtung ferner aufweist: Federhalteteile (35A, 35B, 51B, 52B) zum Halten des Federelements (25), die entweder in dem Kassettengehäuse (1) oder in dem Verschlußteil (7) vorgesehen sind; und Angriffsteile (36, 37), die an dem jeweils anderen des Kassettengehäuses (1) und des Verschlußteils (7) vorgesehen sind; wobei die Angriffsteile (36, 37) so ausgebildet sind, daß sie an dem von wenigstens einem der Federhalteteile (35A, 35B, 51B, 52B) gehaltenen Federelement (25) angreifen, so daß, wenn das Verschlußteil (7) zum Öffnen der Kopfeinführöffnungen (6A, 6B) bewegt wird, das Verschlußteil (7) von dem Federelement (25) federnd in die der Bewegungsrichtung entgegengesetzte Richtung gedrückt wird.

2. Plattenkassetten-Vorrichtung nach Anspruch 1, wobei die Federhalteteile (35A, 35B, 51B, 52B) an dem Kassettengehäuse (1) vorgesehen sind, während die Angriffsteile (36, 37) an dem Verschlußteil (7) vorgesehen sind.

3. Plattenkassetten-Vorrichtung nach Anspruch 2, wobei die Federhalteteile (35A, 35B, 51B, 52B) im wesentlichen symmetrisch zueinander relativ zum Bewegungsmittelpunkt der Gleitbewegung des Verschlußteils vorgesehen sind.

4. Plattenkassetten-Vorrichtung nach Anspruch 3, wobei das Verschlußteil (7) eine im wesentlichen T-förmige ebene Gestalt hat, wobei an dem zentralen Teil der Verschlußteilwände (27) verschließende Abdeckteile (29) vorgesehen sind.

5. Plattenkassetten-Vorrichtung nach Anspruch 3, wobei ein verschließender Abdeckteil (29) an dem zentralen Teil der Verschlußteilwand (27) vorgesehen ist und die Kopfeinführöffnungen (38) auf jeder Seite des Abdeckteils (29) vorgesehen sind.

6. Plattenkassetten-Vorrichtung nach einem der vorhergehenden Ansprüche, wobei das Druckfederelement (25) eine Schraubenfeder aufweist, die infolge der Bewegung des Verschlußteils (7) aus seiner Mittellage so zusammendrückbar ist, daß sie eine Gegenkraft erzeugt, um das Verschlußteil (7) federnd in seine Mittellage zurückzudrücken.

7. Plattenkassetten-Vorrichtung nach einem der vorhergehenden Ansprüche, wobei das Verschlußteil (7) gegenüberliegende Verschlußflächenteile (27) aufweist, die durch einen Verbindungsteil (29) so miteinander verbunden sind, daß sie einen im wesentlichen U-förmigen Querschnitt haben, und wobei eine Halteklaue (33) so ausgebildet ist, daß sie von der Innenfläche des Verbindungsteils (28) vorsteht, um in eine in der Innenfläche des Kassettengehäuses (1) gebildete Führungsnut (9A, 9B) einzugreifen und dadurch die Bewegung des Verschlußteils (7) zu führen.

# FIG. 1A

# FIG. IB

# FIG. 2A

# F I G. 2B

# FIG. 3

# FIG. 4

# FIG. 5

# FIG. 6

# FIG. 7

# FIG. 8

# FIG. 9

**F I G. 9A**

**F I G. 9B**

EP 0 295 025 B1

# FIG. 10

2 3
1

25
34A 34B
7
29
29

# FIG. 11

2 3
1

35A 35B
34A 51B
34B
6A 6B

# FIG. 12

35B
3
9B

# FIG. 13

32 25 7 32
32 32
35A 35B
37 33
9A 9B
2 3
7
2 3
1

# FIG. 14

36 37 28 37 36 7
33 33
27 27
38 29 38

# FIG. 15A
# PRIOR ART

# FIG. 15B
# PRIOR ART